# EUROPEAN PATENT SPECIFICATION

(11) **EP 3 061 352 B1**
(45) Date of publication and mention of the grant of the patent: **19.09.2018**
(21) Application number: 14856082.4
(22) Date of filing: 11.08.2014
(51) Int. Cl.: A23L 3/40, A23B 7/02, A23P 20/12, A23L 29/212, A23L 29/225, A23L 5/10, A23L 19/00

(54) **METHOD FOR PRODUCING KAKIAGE**
VERFAHREN ZUR HERSTELLUNG VON KAKIAGE
PROCÉDÉ DE PRODUCTION DE KAKIAGE

(30) Priority: 22.10.2013 JP 2013218792
(43) Date of publication of application: 31.08.2016
(73) Proprietor: Nisshin Seifun Group Inc., Chiyoda-ku Tokyo 101-8441 (JP); Nisshin Foods Inc., Tokyo 101-8441 (JP)
(72) Inventor: ITO, Takashi, Fujimino-shi Saitama 3568511 (JP); KOJIMA, Kazuko, Fujimino-shi Saitama 3568511 (JP); SESAI, Takashi, Fujimino-shi Saitama 3568511 (JP); IRIE, Kentaro, Fujimino-shi Saitama 3568511 (JP); NISHIDE, Tatsunori, Tokyo 1038544 (JP)
(74) Representative: Forstmeyer, Dietmar
(86) International application number: PCT/JP2014/071220
(87) International publication number: WO 2015/059985

(56) References cited:
- EP-A1- 2 481 294
- JP-A- H03 259 059
- JP-A- H07 123 933
- JP-A- H07 170 920
- JP-A- H07 170 920
- JP-A- H10 117 705
- JP-A- S61 209 556
- JP-A- 2000 050 816
- JP-A- 2000 262 249
- JP-A- 2002 306 141
- JP-A- 2004 041 122
- JP-A- 2007 166 950
- US-A- 4 419 371
- US-A- 6 139 894
- DATABASE WPI Week 199201 Thomson Scientific, London, GB; AN 1992-004614 XP002767610, & JP H03 259059 A (OKUMOTO SEIFUN KK) 19 November 1991 (1991-11-19)

## Description

### Technical Field

The present invention relates to a method for producing *kaki-age. Kaki-age* is a type of *tempura,* and is a food product made by deep-frying ingredients (food items), such as vegetables and seafood, coated with a crust material.

### Background Art

In a *kaki-age,* the crust covering the ingredients needs to have a fluffy and crisp texture (crispness) and savory flavor. Unfortunately, the moisture in the ingredients, which are covered by the crust, transfers to the crust with the passage of time, and the crispness and flavor possessed by the crust immediately after deep-frying tend to diminish at the time of consumption. Thus, there is a demand for a technique to prevent the transferring of moisture and maintain the texture and flavor obtained immediately after deep-frying. The same applies also to deep-fried frozen *kaki-age.* Deep-fried frozen *kaki-age* is a food product for preservation made by freezing a deep-fried *kaki-age,* and is normally consumed by being thawed/cooked by using e.g. an oven or a microwave oven.

As an example of methods for producing *kaki-age* including vegetables as its main ingredients, Patent Literature 1 discloses a method involving: mixing 5 to 20 parts by weight of a crust material per 100 parts by weight of ingredients that have been subjected to a specific pretreatment; frying (deep-frying) the mixture with a cooking oil by bringing the mixture into contact with, or by letting the mixture pass through, a high-temperature oil of from 160°C to 200°C, then a low-temperature oil of from 120°C to 160°C, and finally a medium-temperature oil of from 140°C to 180°C, such that the moisture content is reduced to 7 wt% or less; and then eliminating the oil by drying the fried ingredients with hot air at a temperature of 120°C or lower such that the oil content is reduced to 70 wt% or less. Patent Literature 1 states that, with the disclosed method, it is possible to prevent browning of the vegetables, which are the main ingredients, while maintaining long-term preservability of the food product.

As an example of a method for producing a deep-fried frozen food product that, when thawed/cooked, has a crispness/flavor comparable to that of a fried food product immediately after deep-frying, Patent Literature 2 discloses a method involving: coating ingredients with a specific crust material; deep-frying the coated ingredients; further heating the deep-fried ingredients with a jet-injection-type heating device, such as a jet oven; and then freezing the product. In an embodiment disclosed in Patent Literature 2 that employs vegetables as ingredients, deep-frying is performed for two minutes at a temperature of from 175°C to 180°C, and heating with the jet-injection-type heating device is performed for 2.5 minutes at 190°C.

### Citation List

### Patent Literature

Patent Literature 1: JP 7-170920A
Patent Literature 2: JP 2008-22860 7A
Patent literature 3: US4419371A, relating to a packaged topping containing batter-fried vegetable pieces, such as batter fried onion pieces.

### Summary of Invention

The present invention provides a method for producing kaki-age, according to the appended claims.

### Description of Embodiments

In the method for producing *kaki-age* disclosed in Patent Literature 1, the ingredients consecutively undergo three stages of deep-frying by using three types of oil having different oil temperatures. This, however, may give rise to problems, such as an increase in size and complexity of the production device and a steep rise in production cost. In the method for producing *kaki-age* disclosed in Patent Literature 2, the oil temperature at the time of deep-frying is around 180°C, which is relatively high. Further, the temperature of heating carried out with the jet-injection-type heating device after deep-frying is 190°C, which is also relatively high. Thus, the ingredients may get burnt and the fried color of the crust may become too dark, and also the texture and outer appearance may become unfavorable.

The present invention relates to a method for producing *kaki-age* that has excellent outer appearance, texture, and shape retainability, and in which these excellent characteristics are maintained even after preservation including freezing.

The method for producing *kaki-age* according to the present invention includes: a crust-material coating step of coating an ingredient with a crust material; and a heating step of subjecting the ingredient which has undergone the crust-material coating step to a heating treatment. If necessary, the method of the invention may include a freezing step of freezing the ingredient that has undergone the heating step (i.e., the *kaki-age*).

The ingredients to be used in the present disclosure are food items that are to be covered by a crust in the *kaki-age,* which is the final product, and various food items usable as ingredients in this type of *tempura* food product can be used without particular limitation, with examples including: vegetables; seafood such as shrimp, squid, sillaginoid fish, and horse mackerel; meat, such as beef, pork, and chicken; and processed products of the above. The present invention is particularly effective in cases where vegetables are used as the ingredients. Examples of vegetables include sweet potatoes, pumpkins, carrots, *gobo* (burdock), *renkon* (lotus root), onions, leeks, eggplants, asparagus, *mitsuba* (Japanese honeywort), chrysanthemum greens, and also mushrooms (e.g. hen-of-the-woods, *shiitake* mushroom, *matsutake* mushroom, *enoki* mushroom, *buna shimeji* (brown beech mushroom), and king trumpet mushroom). The aforementioned items are simply examples, and ingredients usable are not limited thereto.

The method for producing *kaki-age* according to the present invention is particularly effective where the ingredients include julienned vegetables, and it is possible to produce *kaki-age* with excellent outer appearance, texture, and shape retainability without burning the ingredients, even if the ingredients are relatively thin and cook easily, as is the case with julienned vegetables. In the present Description, "julienned vegetables" include leaf vegetables--such as *mitsuba* (Japanese honeywort) and chrysanthemum greens--that have been cut into an appropriate size (length). As regards the julienning size, the length in the longitudinal direction is preferably from 30 to 50 mm, more preferably from 30 to 40 mm, and the length in directions orthogonal to the longitudinal direction (i.e., the width direction and thickness direction) is preferably from 2 to 5 mm, more preferably from 2 to 3 mm. Julienned vegetables may constitute a portion of the ingredients, or all of the ingredients.

In the crust-material coating step, the method for coating the ingredients with the crust material is not particularly limited. The ingredients may be coated with the crust material in a single coating treatment, or may be coated in a plurality of steps. An example of methods for coating the ingredients with the crust material is to first dust the ingredients with a sprinkling flour, which serves as the crust material, and then further coat the flour-sprinkled ingredients with a batter, which also serves as the crust material. The batter can be prepared by adding an appropriate amount of water to a flour-form batter mix (crust material) which contains cereal flour as a main component, and mixing the mixture. The dusting of sprinkling flour and the coating of batter can be performed according to ordinary methods; for example, as for the sprinkling flour, flour may be directly pressed onto the ingredients or may be dusted onto the ingredients, to render the ingredients in a "flour-sprinkled state." As for the batter, which is in a liquid state, the ingredients may be immersed in the batter, or the batter may be applied or sprayed onto the ingredients. By first dusting the ingredients with a sprinkling flour before coating them with a batter as in the aforementioned method, the adhesion of the crust to the ingredients is improved, and texture can further be enhanced. Normally, the sprinkling flour is dusted evenly over the entire surface of the ingredients. The aforementioned "flour-sprinkled state" refers to a state in which the sprinkling flour is dusted evenly over the entire surface of the ingredients. This state encompasses not only a state in which the entire surface of the ingredients is covered by the sprinkling flour, but also a state in which the sprinkling flour has been generally dusted overall, even though there may be sections on the surface of the ingredients where no sprinkling flour has been dusted.

There is no distinction, in terms of components, between the sprinkling flour and the batter mix which are used as the crust material, and cereal flour can be used as the main component of the sprinkling flour and/or the batter mix. Examples of the cereal flour include: wheat flour, such as hard wheat flour (bread flour), semi-hard wheat flour, medium-strength wheat flour (all-purpose flour), soft wheat flour (cake flour), and durum wheat flour; starch, such as corn starch, tapioca starch, potato starch, wheat starch, and rice starch; processed starch obtained by subjecting starch to various treatments, such as pregelatinization, acetylation, etherification, esterification, oxidation, and cross-linking; and rice flour. A single type of the aforementioned cereal flour may be used alone, or two or more types may be used in combination. If necessary, components other than cereal flour may be included, such as egg white powder, egg yolk powder, whole egg powder, protein, baking powder, oils/fats, various sugars, thickening agents, table salt, seasonings, food colorings, spices, emulsifiers, dextrin, and dietary fiber. These other components are also a part of the crust material.

In cases of using wheat flour as the crust material (sprinkling flour and/or batter), heat-moisture-treated wheat flour is preferably used. Heat-moisture-treated wheat flour is produced by subjecting wheat flour to a heat-moisture treatment which involves: adding water or water vapor to wheat flour; and heating the same. By the heat-moisture treatment, gluten included in the wheat flour is modified, thus gelatinizing starch. Using heat-moisture-treated wheat flour in the crust material achieves the effect of improving crispness in the crust obtained by deep-frying the crust material. Examples of methods for producing heat-moisture-treated wheat flour include: (1) a method of filling a hermetically sealable container with water-added wheat flour, and then subjecting the wheat flour to a heating treatment in a pressurized state by using saturated water vapor; and (2) a method of adding water to wheat flour and heating and kneading the same by using a uniaxial or biaxial extruder. For example, heat-moisture-treated wheat flour can be produced by: first adding an appropriate amount of water to soft wheat flour; placing the water-added flour in an aluminum pouch and hermetically sealing the pouch; and subjecting the same to a heating treatment (e.g. at a temperature from 110°C to 130°C for 10 to 20 minutes) in a pressurized state (1 atmosphere) by using saturated water vapor. As for the heat-moisture-treated wheat flour, it is also possible to use heat-moisture-treated wheat flour disclosed in JP 2008-67675A. The content of the heat-moisture-treated wheat flour in the crust material is preferably from 50 to 95 mass%.

In the crust-material coating step, the ingredient(s) is/are coated with the crust material such that the proportion of the crust material, in terms of solid content, is within a range from 30 to 50 parts by mass--preferably from 37 to 50 parts by mass, more preferably from 37 to 43 parts by mass--per 100 parts by mass of the ingredient(s). Stated differently, in the present invention, the proportion of the mass of the crust material's solid content with respect to the mass of the ingredient(s) (i.e., "the mass of the crust material's solid content"/"the mass of ingredient(s)" × 100) (referred to hereinafter also as "crust-material-solid-content coating rate") is set to 30 to 50 mass%. If the crust-material-solid-content coating rate is less than 30 mass%, the crust of the *kaki-age* may be thin and the crust may have little effect of joining the ingredients together, and thus the shape retainability of the *kaki-age* may be poor. Further, in the present invention, as will be described further below, the moisture content of the *kaki-age,* which is the final product, is adjusted to 10 mass% or less, particularly from the viewpoint of texture (crispness); so if the crust-material-solid-content coating rate is higher than 50 mass%, it becomes difficult to eliminate moisture and to achieve the aforementioned moisture content of 10 mass% or less. The crust-material-solid-content coating rate can be adjusted by appropriately adjusting, for example, the amount of the crust material (sprinkling flour and/or batter), the dusting/coating method, and/or viscosity as for the batter.

In the heating step, the crust-material-coated ingredient(s) having undergone the crust-material coating step is/are subjected at least to deep-frying as a heating treatment. Deep-frying is a treatment (frying treatment) in which the ingredient(s) is/are heated and fried in oil, and can be performed according to ordinary methods. The oil used for the deep-frying is not particularly limited, and various types of cooking oil can be used. The heating step may include heating treatments other than deep-frying; that is, a plurality of heating treatments may be performed, deep-frying is performed only once. Performing deep-frying multiple times as in the method of Patent Literature 1 may increase the size and complexity of the production device and may also impair productivity.

In the heating step, the crust-material-coated ingredient(s) is/are subjected to a heating treatment including deep-frying such that the moisture content of the *kaki-age,* which is the final product, is 10 mass% or less. That is, the conditions for the heating treatment in the present invention (e.g. heating temperature (temperature of product during heating), heating time, heating method, etc.) are set as appropriate so that the moisture content of the final product is 10 mass% or less. Note, however, that the moisture content of the final product is affected not only by the conditions of the heating treatment, but also by the composition of the crust-material-coated ingredient, which is the target of the heating treatment. The present invention takes this into consideration, and thus the crust-material-solid-content coating rate is set within the specific range as described above. If the moisture content of the final product is higher than 10 mass%, crispness is lost and texture may be impaired. On the other hand, if the moisture content of the final product is too low, the texture may become too hard. The moisture content of the final product is preferably 9 mass% or less, more preferably from 7 to 9 mass%. The moisture in the final product was calculated according to an ordinary method on the basis of: the final product's dry mass measurement value found by the atmospheric-pressure heating-drying method in which the mass of the final product, for which the moisture is to be measured, is measured after heating and drying the product at 85°C for 15 hours; and the mass of the final product before drying.

In the heating treatment according to the present invention, the oil temperature in deep-frying is from 135°C to 155°C inclusive, more preferably from 140°C to 150°C inclusive. By setting the oil temperature for deep-frying within the aforementioned specific range, it is possible to more reliably provide the final product with a moisture content of 10 mass% or less while effectively preventing degradation in the *kaki-age*'s outer appearance caused by darkening in the fried color due to overheating. Particularly in cases where the ingredients are mainly vegetables, if the oil temperature for deep-frying is set to a low-temperature range below 135°C in order to eliminate the moisture in the vegetables, then it may be difficult to drain oil from the *kaki-age* and the texture and flavor of the *kaki-age* may become unfavorable; conversely, if the oil temperature is set to a high-temperature range above 155°C, the ingredients may get burnt and the color of the crust may become dark, rendering the texture and outer appearance of the *kaki-age* unfavorable. The deep-frying time can be set as appropriate depending on, for example, the size of the *kaki-age.*

The heating treatment according to the present invention may include only deep-frying, or may include other heating treatments in addition to deep-frying. An example of another heating treatment that may be used in combination with deep-frying as the heating treatment of the invention is a hot-air drying treatment. The hot-air drying treatment is preferably used in the present invention because it is a treatment that directly heats a target food product (*kaki-age*) by causing heated-pressurized air to collide against the food product, and thus, oil can be drained from the food product favorably without impairing the freshness and flavor of the food material (ingredients). The hot-air drying treatment can be performed by using a jet-injection-type heating device. In general, jet-injection-type heating devices, which are also called jet ovens, are constructed so as to apply pressure to heated air and blow the heated-pressurized air from above and below against the food product to be heated. An example of commercially available jet-injection-type heating devices is Impinger from Lincoln.

In cases where the heating treatment of the present invention includes both deep-frying and a hot-air drying treatment, it is preferable to perform the hot-air drying treatment after deep-frying--and particularly preferably, to dry the deep-fried ingredients (*kaki-age*) with hot-air at a temperature within a range above 120°C and equal to or below 160°C--from the viewpoint of making full use of the characteristics of the hot-air drying treatment. More specifically, it is preferable to blow hot-air at a temperature within a range above 120°C and equal to or below 160°C against the ingredients (*kaki-age*) having been subjected to the heating treatment including deep-frying. The temperature of the hot-air drying treatment (temperature of the hot-air) is preferably within a range above 120°C and equal to or below 145°C, more preferably within a range above 120°C and equal to or below 130°C. The hot-air drying treatment time can be set as appropriate depending on, for example, the size of the *kaki-age.*

In addition to the aforementioned crust-material coating step and heating step, the method for producing *kaki-age* according to the present invention may further include a freezing step for freezing the ingredient(s) (*kaki-age*) having been subjected to the heating treatment including deep-frying. The freezing step can be performed by employing an appropriate freezing method used for this type of *tempura* food product, and quick freezing or slow freezing may be employed. The frozen *kaki-age,* which is the final product obtained by undergoing the freezing step, can be made ready for consumption by unassisted thawing in an atmospheric-temperature range or in a chilled-temperature range, or by thawing/cooking with e.g. an oven or a microwave oven.

### Examples

The following provides Examples for describing the present invention in detail. The present invention, however, is not limited to the following Examples.

### Example 1:

Carrots, *gobo* (burdock), onions, and chrysanthemum greens were prepared as the food items (ingredients) for *kaki-age.* The vegetable ingredients were prepared as follows. The carrots, *gobo,* and onions were julienned into a length of 30 mm in the longitudinal direction and 3 mm per side (i.e., the length in both the thickness direction and the width direction was 3 mm) in a manner so as not to chop up the fibers therein. The chrysanthemum greens were cut into a length of 5 mm. 15 mass% of *tempura* flour--serving as a sprinkling flour (crust material)--with respect to the mass of the ingredients was dusted onto the prepared ingredients, and then, the ingredients were mixed with a batter adjusted so as to give a predetermined crust-material-solid-content coating rate (the crust-material coating step). Then, the crust-material-coated ingredients were deep-fried at an oil temperature of 145°C for 6 minutes by using a manual fryer containing rape-seed oil (the heating step). Deep-frying was performed by: using a commercially available *kaki-age* ring (a ring with a ladle-like long handle; ring diameter: 10 cm); pouring 100 g of the crust-material-coated ingredients into the ring; and deep-frying, to produce a *kaki-age* that is 10 cm in diameter and 2.5 cm high (thick). After deep-frying, the *kaki-age* was scooped up from the fryer with a wire mesh, and oil was sufficiently drained therefrom. Then, the deep-fried *kaki-age* was subjected to quick freezing (setting temperature: -30°C) in a freezer (FR-603D-S type freezer from Hoshizaki Electric Co., Ltd.), to produce a frozen *kaki-age* including only vegetables as its ingredients. The thus-produced frozen *kaki-age* was preserved in a freezer at -18°C for 1 month.

The composition of the *tempura* flour used as the sprinkling flour in Example 1 was as follows: heat-moisture-treated wheat flour (85.2 mass%), baking powder (1.2 mass%), processed starch (10 mass%), whole egg powder (0.2 mass%), emulsifier (0.3 mass%), trehalose (2 mass%), table salt (1 mass%), and gardenia food coloring (0.1 mass%). As for the batter used in Example 1, the *tempura* flour used as the sprinkling flour in Example 1 was used as the batter mix, and the batter was prepared by adding 130 parts by mass of cold water per 100 parts by mass of the *tempura* flour (water addition rate: 130 mass%), and mixing the mixture with a mixer.

### Examples 2 to 4 and Comparative Examples 1 and 2:

Frozen *kaki-ages* were produced in the same manner as in Example 1, except that the crust-material-solid-content coating rates were changed. The frozen *kaki-ages* were preserved in a freezer at -18°C for 1 month.

### Examples 5 to 7 and Comparative Example 3:

Frozen *kaki-ages* were produced in the same manner as in Example 1, except that the oil temperatures for deep-frying were changed. The frozen *kaki-ages* were preserved in a freezer at -18°C for 1 month.

### Examples 8 to 11 and Comparative Example 4:

The deep-frying time was changed to 4 minutes, and after deep-frying, the oil-drained ingredients (*kaki-ages*) were subjected to a hot-air drying treatment in which the ingredients were heated by blowing hot-air at a predetermined temperature from above and below the ingredients by using a continuous jet oven (Impinger from Lincoln), a jet-injection-type heating device. Other than the above, frozen *kaki-ages* were produced in the same manner as in Example 1, and the frozen *kaki-ages* were preserved in a freezer at -18°C for 1 month.

### Evaluation:

The respective frozen *kaki-ages* of the aforementioned Examples and Comparative Examples were thawed/cooked in a microwave oven, and sensory evaluations in terms of outer appearance, texture, and shape retainability were performed by ten panelists according to the following evaluation criteria. The evaluation results (average of the points from the ten panelists) are shown in Tables 1 to 3 below. Table 1 summarizes the effect that the crust-material-solid-content coating rate has on the items being evaluated, Table 2 summarizes the effect of the oil temperature for deep-frying, and Table 3 summarizes the effect of the hot-air drying treatment. The results for Example 3 are shown in all of the tables from the viewpoint of facilitating comparison.

### {Evaluation Criterion regarding Outer Appearance}

5 points: Fried color is extremely light; color of ingredients is clear and fresh.
4 points: Fried color is light; ingredients are hardly burnt.
3 points: Fried color is slightly dark; there are some burns in ingredients.
2 points: Fried color is dark; portions of ingredients are burnt.
1 point: Fried color is extremely dark; a large portion of ingredients is burnt.

### {Evaluation Criterion regarding Texture}

5 points: Extremely crisp; absolutely no toughness (stiffness).
4 points: Crisp; no toughness.
3 points: Slightly lacking crispness; slightly tough.
2 points: No crispness; tough.
1 point: Absolutely no crispness; extremely tough.

### {Evaluation Criterion regarding Shape Retainability}

5 points: Excellent shape retainability.
4 points: Good shape retainability.
3 points: Slightly poor shape retainability.
2 points: Poor shape retainability; ingredients are not gathered together.
1 point: Extremely poor shape retainability; ingredients completely fall apart.

**[Table 1]**

| | | Example | | | | Comparative Example | |
|---|---|---|---|---|---|---|---|
| | | 1 | 2 | 3 | 4 | 1 | 2 |
| | Crust-material-solid-content coating rate (mass%) | 30 | 37 | 43 | 50 | 26 | 54 |
| | Oil temperature for deep-frying (°C) | 145 | 145 | 145 | 145 | 145 | 145 |
| | Deep-frying time (min.) | 6 | 6 | 6 | 6 | 6 | 6 |
| | Hot-air drying treatment | No | No | No | No | No | No |
| | Moisture content in final product (mass%) | 7.0 | 7.8 | 8.5 | 9.3 | 6.3 | 11.5 |
| Sensory evaluation | Outer appearance | 4.5 | 4.7 | 4.7 | 4.7 | 4.5 | 4.6 |
| | Texture | 4.6 | 4.7 | 4.8 | 4.1 | 4.4 | 2.3 |
| | Shape retainability | 4.0 | 4.3 | 4.8 | 4.7 | 2.1 | 4.0 |
| | Total evaluation point | 13.1 | 13.7 | 14.3 | 13.5 | 11.0 | 10.9 |

As is clear from Table 1, Comparative Examples 1 and 2 had crust-material-solid-content coating rates outside the specific range (from 30 to 50 mass%), and thus, were rated poorly compared to the Examples having crust-material-solid-content coating rates within the specific range. Particularly, Comparative Example 1 had a crust-material-solid-content coating rate below the lower limit value (30 mass%) of the specific range, and thus, the resulting crust was thin and lacked the ability to join the ingredients together. Thus, Comparative Example 1 had poor shape retainability. Comparative Example 2 had a crust-material-solid-content coating rate above the upper limit value (50 mass%) of the specific range, and thus, it was difficult to eliminate moisture and impossible to achieve a moisture content of 10 mass% or less in the final product by employing only deep-frying as the heating treatment. Thus, Comparative Example 2 had poor texture.

**[Table 2]**

| | | Example | | | | Comparative Example |
|---|---|---|---|---|---|---|
| | | 5 | 3 | 6 | 7 | 3 |
| | Crust-material-solid-content coating rate (mass%) | 43 | 43 | 43 | 43 | 43 |
| | Oil temperature for deep-frying (°C) | 135 | 145 | 155 | 160 | 130 |
| | Deep-frying time (min.) | 6 | 6 | 6 | 6 | 6 |
| | Hot-air drying treatment | No | No | No | No | No |
| | Moisture content in final product (mass%) | 9.3 | 8.5 | 6.9 | 5.5 | 11.9 |
| Sensory evaluation | Outer appearance | 4.8 | 4.7 | 4.3 | 2.2 | 4.5 |
| | Texture | 4.5 | 4.8 | 4.7 | 4.4 | 1.8 |
| | Shape retainability | 4.6 | 4.8 | 4.5 | 4.4 | 3.4 |
| | Total evaluation point | 13.9 | 14.3 | 13.5 | 11.0 | 9.7 |

As is clear from Table 2, in Comparative Example 3, only deep-frying was employed as the heating treatment and the oil temperature was 130°C, which is relatively low. Thus, heating was insufficient, and it was difficult to eliminate moisture and impossible to achieve a moisture content of 10 mass% or less in the final product. Thus, Comparative Example 3 had poor texture. In Example 7, only deep-frying was employed as the heating treatment and the oil temperature was 160°C, which is relatively high. This caused overheating, and the fried color was dark and burnt, and thus, Example 7 had a poor outer appearance.

**[Table 3]**

| | | Example | | | | | Comparative Example |
|---|---|---|---|---|---|---|---|
| | | 3 | 8 | 9 | 10 | 11 | 4 |
| | Crust- material-so lid-content coating rate (mass%) | 43 | 43 | 43 | 43 | 43 | 43 |
| | Oil temperature for deep-frying (°C) | 145 | 145 | 145 | 145 | 145 | 145 |
| | Deep-frying time (min.) | 6 | 4 | 4 | 4 | 4 | 4 |
| | Hot-air drying treatment | No | Yes | Yes | Yes | Yes | No |
| | Hot-air drying treatment temperature (°C) | - | 170 | 160 | 140 | 121 | - |
| | Hot-air drying treatment time (min.) | - | 5 | 5 | 5 | 5 | - |
| | Moisture content in final product (mass%) | 8.5 | 3.3 | 3.7 | 6.4 | 8.3 | 12.8 |
| Sensory evaluation | Outer appearance | 4.7 | 2.2 | 4.2 | 4.6 | 4.6 | 4.5 |
| | Texture | 4.8 | 4.1 | 4.5 | 4.8 | 4.6 | 2.0 |
| | Shape retainability | 4.8 | 4.6 | 4.7 | 4.7 | 4.8 | 4.2 |
| | Total evaluation point | 14.3 | 10.9 | 13.4 | 14.1 | 14.0 | 10.7 |

As is clear from Table 3, in Comparative Example 4, no hot-air drying treatment was performed after deep-frying even though the deep-frying time was 4 minutes, which was shorter than Example 3. Thus, heating was insufficient, and it was difficult to eliminate moisture and thus impossible to achieve a moisture content of 10 mass% or less in the final product. Thus, Comparative Example 4 had poor texture. Also, by comparing Examples 8 to 11, it was found that a hot-air drying treatment at 170°C (Example 8) resulted in a dark fried color and poor outer appearance, but in cases where the hot-air drying treatment temperature was within a range above 120°C and equal to or below 160°C (Examples 9 to 11), it was possible to produce *kaki-ages* having excellent outer appearance, texture, and shape retainability even after being frozen and preserved. It should be noted that several of the panelists that took part in the evaluation stated that, between Example 3 in which no hot-air drying treatment was performed and Example 11 wherein the hot-air drying treatment was performed, oil was drained better in Example 11 and the finish was more oil-free.

### Industrial Applicability

With the present invention, it is possible to efficiently produce, by using existing equipment, *kaki-age* that has excellent outer appearance, texture, and shape retainability, and in which these excellent characteristics are maintained even after preservation including freezing, without increasing the size and complexity of the production device. Herein, shape retainability is an index that indicates the tendency of *kaki-age* to lose its shape; if the shape retainability is poor, the *kaki-age* may lose its shape and fall apart after being scooped up from the oil after deep-frying. If, for example, a *kaki-age* produced by performing the production method of the present invention is frozen and preserved and then thawed and cooked with e.g. a microwave oven, it is possible to obtain a *kaki-age* whose crust has excellent outer appearance and flavor and has a texture (crispness) that is comparable to that immediately after deep-frying, and whose ingredients (food items) have excellent texture.

## Claims

1. A method for producing *kaki-age* comprising the steps of:
coating an ingredient that includes julienned vegetable with a crust material such that the proportion of the crust material, in terms of solid content, is within a range from 30 to 50 parts by mass per 100 parts by mass of the ingredient; and
subjecting the crust-material-coated ingredient to a heating treatment including deep-frying such that the moisture content of the final product is 10 mass% or less; wherein deep-frying is only performed once and the oil temperature for the deep-frying is from 135 °C to 155 °C inclusive.

2. The method for producing *kaki-age* according to claim 1, wherein:
the heating treatment includes a hot-air drying treatment; and
in the hot-air drying treatment, the deep-fried ingredient is dried with hot air at a temperature within a range above 120°C and equal to or below 160°C.

3. The method for producing *kaki-age* according to claim 1 or 2, further including a step of freezing the ingredient that has been subjected to the aforementioned steps.

## Patentansprüche

1. Verfahren zur Herstellung von Kakiage (gemischtes Tempura; "kaki-age"), das die Schritte umfasst:
das Umhüllen eines Inhaltsstoffs, der fein geschnittene Streifen (Julienne) von Gemüse beinhaltet, mit einem Krustenmaterial, derart, dass der Anteil des Krustenmaterials, in Bezug auf den Feststoffgehalt, in einem Bereich von 30 bis 50 Massenteilen pro 100 Massenteile des Inhaltsstoffs ist; und
den mit einem Krustenmaterial umhüllten Inhaltsstoff einer Wärmebehandlung unterziehen, wobei die Wärmebehandlung Frittieren beinhaltet, derart, dass der Feuchtigkeitsgehalt des Endprodukts 10 Masse-% oder weniger beträgt; wobei das Frittieren nur einmal durchgeführt wird und die Öltemperatur für das Frittieren von 135 °C bis einschließlich 155 °C beträgt.

2. Das Verfahren zur Herstellung von Kakiage nach Anspruch 1, wobei:
die Wärmebehandlung eine Trocknungsbehandlung mit Heißluft umfasst; und der frittierte Inhaltsstoff bei der Trocknungsbehandlung mit Heißluft mit heißer Luft bei einer Temperatur in einem Bereich oberhalb von 120 °C und gleich oder unterhalb von 160 °C getrocknet wird.

3. Das Verfahren zur Herstellung von Kakiage nach Anspruch 1 oder 2, das ferner einen Schritt des Einfrierens des Inhaltsstoffs, der den zuvor genannten Schritten unterzogen worden ist, umfasst.

## Revendications

1. Procédé de production de *kaki-age* comprenant les étapes suivantes :
l'enrobage d'un ingrédient qui comprend des légumes taillés en julienne avec un appareil de croûte de façon que la proportion de l'appareil de croûte, en termes de teneur solide, soit dans une plage de 30 à 50 parties en poids pour 100 parties en poids de l'ingrédient ; et
la soumission de l'ingrédient enrobé de l'appareil de croûte à un traitement thermique dont une friture de façon que la teneur en humidité du produit final soit de 10 % en poids ou moins ; dans lequel la friture n'est réalisée qu'une seule fois et la température d'huile pour la friture est de 135 à 155 °C, limites comprises.

2. Procédé de production de *kaki-age* selon la revendication 1, dans lequel :
le traitement thermique comprend un traitement de séchage par air chaud ; et
dans le traitement de séchage par air chaud, l'ingrédient frit est séché par air chaud à une température dans une plage supérieure à 120 °C et égale ou inférieure à 160 °C.

3. Procédé de production de *kaki-age* selon la revendication 1 ou 2, comprenant en outre une étape de congélation de l'ingrédient qui a été soumis aux étapes susmentionnées.
